# EUROPÄISCHE PATENTSCHRIFT

(11) **EP 1 903 098 B1**
(45) Veröffentlichungstag und Bekanntmachung des Hinweises auf die Patenterteilung: **15.10.2008**
(21) Anmeldenummer: 06117986.7
(22) Anmeldetag: 27.07.2006
(51) Int. Cl.: C11D 3/39, C11D 17/00, C11D 3/02, C01B 15/10

(54) **Umhüllte Natriumpercarbonatpartikel**
Coated sodium percarbonate particle
Particule de percarbonate de sodium enrobée

(43) Veröffentlichungstag der Anmeldung: 26.03.2008
(73) Patentinhaber: Evonik Degussa GmbH, 45128 Essen (DE)
(72) Erfinder: Leininger, Stefan, 63505 Langenselbold (DE); Jakob, Harald, 63594 Hasselroth (DE); Overdick, Ralph, 65719 Hofheim (DE)

(56) Entgegenhaltungen:
- EP-A- 1 612 185
- EP-A1- 0 567 140
- WO-A-95/15292
- WO-A-03/031045
- WO-A-20/04056954
- WO-A-20/04058640
- DE-A1- 10 320 196
- DE-A1- 19 544 293
- GB-A- 2 123 044
- US-A- 4 526 698
- COLE R.S.; FRECH R.: 'Characterization of the sodium sulfate-sodium phosphate system' JOURNAL OF MOLECULAR STRUCTURE Nr. 643, 2002, Seiten 101 - 107

## Beschreibung

Natriumpercarbonat wird zunehmend als bleichwirksamer Bestandteil in Waschmitteln und Reinigungsmitteln eingesetzt. Natriumpercarbonat muss für diese Anwendung eine ausreichende Lagerbeständigkeit in Waschmittel- und Reinigungsmittelzubereitungen aufweisen, da es sonst bei der Lagerung der Waschmittel und Reinigungsmittel zu einem unerwünschten Verlust an Aktivsauerstoff und damit an Bleichwirkung kommt. Natriumpercarbonat ist feuchtigkeitsempfindlich und zersetzt sich in Waschmittel-und Reinigungsmittelzubereitungen bei Einwirkung von Feuchtigkeit unter Verlust von Aktivsauerstoff. Deshalb wird Natriumpercarbonat zur Herstellung von Waschmitteln oder Reinigungsmitteln üblicherweise in umhüllter Form eingesetzt, wobei die Hüllschicht die Einwirkung von Feuchtigkeit auf die umhüllten Natriumpercarbonatpartikel verhindert. Geeignete Hüllschichten aus anorganischen hydratbildenden Salzen, wie zum Beispiel Natriumcarbonat, Natriumsulfat oder Magnesiumsulfat und Mischungen solcher Salze sind beispielsweise aus DE 24 17 572, EP-A 0 863 842 und US 4,325,933 bekannt. Es besteht jedoch weiterhin Bedarf an Hüllschichten mit verbesserter Stabilisierungswirkung.

Es wurde nun überraschend gefunden, dass sich durch eine Hüllschicht, die Natriumsulfat in Form einer Hochtemperaturphase von Natriumsulfat und/oder einer Hochtemperaturphase eines Doppelsalzes von Natriumsulfat und Natriumcarbonat enthält, die Lagerstabilität von Natriumpercarbonat in Waschmitteln gegenüber Natriumpercarbonat verbessern lässt, das in der Hüllschicht Natriumsulfat in Form von Thenardit oder Burkeit enthält.

Gegenstand der Erfindung sind deshalb Natriumpercarbonatpartikel mit einer Hüllschicht, wobei die Hüllschicht Natriumsulfat in Form einer Hochtemperaturphase von Natriumsulfat und/oder einer Hochtemperaturphase eines Doppelsalzes der Zusammensetzung Na₄(SO₄)₁₊ₙ(CO₃)₁₋ₙ mit n von 0 bis 0,5 enthält.

Von wasserfreiem Natriumsulfat sind fünf Festkörperphasen (I) bis (V) bekannt, die sich durch Pulver-Röntgendiffraktometrie an Hand ihrer charakteristischen Beugungsdiagramme unterscheiden lassen. Bei Temperaturen unterhalb 180°C ist die Phase Natriumsulfat(V), auch bekannt als Thenardit, thermodynamisch stabil. Durch Abkühlen der Hochtemperaturphase Natriumsulfat(I) auf Temperaturen unterhalb 237°C ist die Hochtemperaturphase Natriumsulfat(III) zugänglich, die bei Abwesenheit von Feuchtigkeit bei 20°C metastabil ist, während in Gegenwart von Feuchtigkeit oder von Natriumsulfat(V) rasch eine Umwandlung in die thermodynamisch stabile Phase Natriumsulfat(V) erfolgt. Die Strukturen und Beugungsdiagramme dieser Phasen sind dem Fachmann aus der Datenbank des International Centre for Diffraction Data (ICDD) bekannt unter den Datensatznummern 00-037-1465 für Natriumsulfat(V), 00-024-1132 für Natriumsulfat (III) und 01-078-1883 für Natriumsulfat (I).

Natriumsulfat bildet mit Natriumcarbonat Mischsalze der Zusammensetzung Na₄(SO₄)₁₊ₙ(CO₃)₁₋ₙ,wobei n im Bereich von 0 bis 0,5 liegt. Bei 20°C liegen diese Mischsalze in der thermodynamisch stabilen Burkeit-Struktur vor. Das Beugungsdiagramm von Burkeit ist dem Fachmann für n = 0,39 unter der ICDD-Datensatznummer 01-085-1731 bekannt. Für Burkeit ist eine zu Natriumsulfat(I) isostrukturelle hexagonale Hochtemperaturphase bekannt, deren Beugungsdiagramm für n = 0,33 unter der ICDD-Datensatznummer 00-024-1139 bekannt ist.

Die erfindungsgemäßen Natriumpercarbonatpartikel enthalten vorzugsweise Natriumsulfat in Form von Natriumsulfat(III) oder in Form des Doppelsalzes mit hexagonaler Kristallstruktur. Bei Anwesenheit von Natriumsulfat(III) ist der Anteil von Natriumsulfat(III) vorzugsweise größer als der Anteil von Natriumsulfat(V). Bei Anwesenheit des Doppelsalzes mit hexagonaler Kristallstruktur ist der Anteil der hexagonalen Phase vorzugsweise größer als der Anteil von Burkeit. Natriumsulfat(III) und das Doppelsalz mit hexagonaler Kristallstruktur können auch nebeneinander vorliegen.

Die erfindungsgemäßen Natriumpercarbonatpartikel enthalten vorzugsweise mehr als 50 Gew.-% Natriumsulfat in der Hüllschicht, besonders bevorzugt mehr als 70 Gew.-% Natriumsulfat, gerechnet als wasserfreies Natriumsulfat.

Vorzugsweise enthalten die erfindungsgemäßen Natriumpercarbonatpartikel in der Hüllschicht ein Natriumborat. Der Anteil an Natriumborat in der Hüllschicht beträgt dann vorzugsweise 0,5 bis 20 Gew.-% und besonders bevorzugt 1 bis 10 Gew.-%, gerechnet als Natriummetaborat.

Der Gewichtsanteil der Hüllschicht, bezogen auf die Masse des Natriumpercarbonatpartikels, beträgt bei den erfindungsgemäßen Natriumpercarbonatpartikeln vorzugsweise 1 bis 15 %, besonders bevorzugt 2 bis 8 % und insbesondere 2 bis 6 %.

Die erfindungsgemäße Hüllschicht, die Natriumsulfat in Form einer Hochtemperaturphase enthält, ist vorzugsweise so ausgebildet, dass sie das darunter liegende Material zu mehr zu als 95 %, vorzugsweise zu mehr als 98 % und insbesondere vollständig bedeckt.

Die erfindungsgemäßen Natriumpercarbonatpartikel umfassen einen Kern, der im Wesentlichen aus Natriumcarbonat-Perhydrat der Zusammensetzung 2 Na₂CO₃ · 3 H₂O₂ besteht. Sie können im Kern darüber hinaus noch geringe Mengen an bekannten Stabilisatoren für Persauerstoffverbindungen, wie zum Beispiel Magnesiumsalze, Silikate, Phosphate und/oder Chelatkomplexbildner enthalten. Der Anteil von Natriumpercarbonat im Kern der erfindungsgemäßen Natriumpercarbonatpartikel beträgt vorzugsweise mehr als 80 Gew.-% und besonders bevorzugt mehr als 95 Gew.-%. Der Anteil an organischen Kohlenstoffverbindungen im Kern beträgt vorzugsweise weniger als 1 Gew.-%, besonders bevorzugt weniger als 0,1 Gew.-%.

In einer bevorzugten Ausführungsform enthält der Kern geringe Mengen an Additiven, die auf den Aktivsauerstoffgehalt stabilisierend wirken, wobei der Anteil an stabilisierenden Additiven im Kern vorzugsweise weniger als 2 Gew.-% beträgt. Als stabilitätserhöhende Additive werden vorzugsweise Magnesiumsalze, Wasserglas, Stannate, Pyrophosphate, Polyphosphate sowie Chelatkomplexbildner aus der Reihe der Hydroxycarbonsäuren, Aminocarbonsäuren, Aminophosphonsäuren, Phosphonocarbonsäuren und Hydroxyphosphonsäuren sowie deren Alkalimetall-, Ammonium- oder Magnesiumsalze verwendet. In einer besonders bevorzugten Ausführungsform enthält der Kern als stabilisierendes Additiv ein Alkalimetallsilikat, vorzugsweise Wasserglas mit einem SiO₂/Na₂O-Modul im Bereich von 1 bis 3, in einer Menge von 0,1 bis 1 Gew.-%. In der am meisten bevorzugten Ausführungsform enthält der Kern zusätzlich zu dieser Menge an Alkalimetallsilikat noch eine Magnesiumverbindung in einer Menge von 50 bis 2000 ppm Mg²⁺.

Der Kern der erfindungsgemäßen Natriumpercarbonatpartikel kann nach einem der bekannten Herstellverfahren für Natriumpercarbonat erzeugt wurden. Ein geeignetes Herstellungsverfahren für Natriumpercarbonat ist die Kristallisation von Natriumpercarbonat aus wässrigen Lösungen von Wasserstoffperoxid und Natriumcarbonat, wobei die Kristallisation sowohl in Gegenwart, als auch in Abwesenheit eines Aussalzungsmittels durchgeführt werden kann, wozu beispielhaft auf EP-A 0 703 190 und DE 2 744 574 verwiesen wird. Nach dem Kristallisationsverfahren in Gegenwart eines Aussalzungsmittels hergestellte Natriumpercarbonatpartikel können noch geringe Mengen des verwendeten Aussalzungsmittels, wie z.B. Natriumchlorid enthalten. Ebenfalls geeignet ist die Wirbelschicht-Aufbaugranulation durch Aufsprühen von wässriger Wasserstoffperoxidlösung und wässriger Sodalösung auf Natriumpercarbonat-Keime in einer Wirbelschicht bei gleichzeitiger Verdampfung von Wasser, beispielhaft wird auf WO 95/06615 verwiesen. Weiterhin ist auch die Umsetzung von festem Natriumcarbonat mit einer wässrigen Wasserstoffperoxidlösung und nachfolgende Trocknung ein geeignetes Herstellverfahren.

In einer bevorzugten Ausführungsform weisen die erfindungsgemäßen Natriumpercarbonatpartikel einen Kern aus Natriumpercarbonat auf, der durch Wirbelschichtgranulation aus wässrigen Lösungen von Wasserstoffperoxid und Natriumcarbonat erhältlich ist. Durch eine solche Wirbelschichtgranulation wird ein Kernmaterial erhalten, das sich durch einen besonders dichten, schalenförmigen Aufbau und eine glattere Oberfläche von den nach anderen Herstellverfahren erhaltenen Kernmaterialien unterscheidet. Erfindungsgemäße umhüllte Natriumpercarbonatpartikel, deren Kern durch Wirbelschicht-Aufbaugranulation hergestellt wurde, zeigen gegenüber Partikeln, deren Kern nach einem anderen Verfahren hergestellt wurde, eine verbesserte Lagerstabilität in Waschmittel- und Reinigungsmittelzubereitungen.

Bei den aus dem Stand der Technik bekannten Natriumpercarbonatpartikeln, deren Hüllschicht durch Aufsprühen von Lösungen hergestellt wurde, die Natriumsulfat oder Mischungen aus Natriumsulfat und Natriumcarbonat enthalten, liegt das Natriumsulfat in der Hüllschicht in Form der Tieftemperaturphasen Natriumsulfat(V) (Thenardit) oder Burkeit vor.

Die erfindungsgemäßen Natriumpercarbonatpartikel lassen sich durch Aufsprühen von Lösungen erhalten, die Natriumsulfat oder Mischungen aus Natriumsulfat und Natriumcarbonat, sowie ein zur Stabilisierung einer Hochtemperaturphase geeignetes weiteres Kation oder Anion als Additiv enthalten. Die Hochtemperaturphasen Natriumsulfat(I) und Natriumsulfat (III) lassen sich durch zweiwertige und dreiwertige Kationen stabilisieren. Geeignete Kationen sind aus Acta Cryst. B41 (1985) 5-11 und J. Solid State Chem. 138 (1998) 183-192 bekannt. Die Hochtemperaturphasen lassen sich außerdem durch geeignete Anionen stabilisieren. Ein geeignetes Anion ist Phosphat, bekannt aus J. Mol. Struct. 643 (2002) 101-107. Vorzugsweise erfolgt die Stabilisierung der Hochtemperaturphase durch den Zusatz eines Borats, besonders bevorzugt durch den Zusatz von Metaborat, insbesondere von Natriummetaborat. Durch den Zusatz von Natriummetaborat lassen sich Natriumsulfat(III) und die hexagonale Hochtemperaturphase des Natriumsulfat-Natriumcarbonat-Mischsalzes stabilisieren.

Während des Aufsprühens der wässrigen Lösung, die Natriumsulfat und das die Hochtemperaturphase stabilisierende Additiv gelöst enthält, wird vorzugsweise bereits der größte Teil des darin enthaltenen Wassers, insbesondere mehr als 90% des in der wässrigen Lösung enthaltenen Wassers, durch Wärmezufuhr verdampft, so dass während des Aufbringens der Hüllschicht nur ein geringer Teil des darunter liegenden Materials wieder angelöst wird und sich bereits während des Aufsprühens eine feste Hüllschicht ausbildet. Das Aufbringen der erfindungsgemäßen Hüllschicht erfolgt vorzugsweise durch Versprühen einer Natriumsulfat und das die Hochtemperaturphase stabilisierende Additiv enthaltenden wässrigen Lösung in einer Wirbelschicht und besonders bevorzugt nach dem in EP-A 0 970 917 beschriebenen Verfahren, mit dem bereits mit geringen Mengen an Hüllschichtmaterial eine dichte Hüllschicht erreicht werden kann. Das Aufbringen der Hüllschicht in einer Wirbelschicht erfolgt vorzugsweise unter Zufuhr eines Trocknungsgases zur Wirbelschicht, so dass sich in der Wirbelschicht eine Temperatur im Bereich von 30 bis 90 °C, vorzugsweise 50 bis 70 °C, einstellt.

Zusätzlich zu der erfindungsgemäßen Hüllschicht, die Natriumsulfat in Form einer Hochtemperaturphase enthält, können die erfindungsgemäßen Natriumpercarbonatpartikel noch eine oder mehrere weitere Hüllschichten enthalten, wobei diese sowohl zwischen dem Kern und der erfindungsgemäßen Hüllschicht, als auch außerhalb der erfindungsgemäßen Hüllschicht angeordnet sein können. Vorzugsweise befindet sich die erfindungsgemäße Hüllschicht unmittelbar auf dem Kernmaterial aus Natriumpercarbonat.

Zwischen den Hüllschichten sowie zwischen der innersten Hüllschicht und dem Kern kann eine scharfe Grenze existieren, an der sich die Zusammensetzung sprunghaft ändert. In der Regel wird sich jedoch zwischen den einzelnen Hüllschichten, sowie zwischen der innersten Hüllschicht und dem Kern jeweils eine Übergangszone ausbilden, die die Komponenten beider aneinander grenzenden Schichten enthält. Solche Übergangszonen entstehen beispielsweise durch das Auftragen einer Hüllschicht in Form einer wässrigen Lösung, wobei zu Anfang des Schichtaufbaus ein Teil der darunter liegenden Schicht angelöst wird, so dass eine Übergangszone entsteht, die die Bestandteile beider Schichten enthält. In der bevorzugten Ausführungsform, bei der sich die erfindungsgemäße Hüllschicht unmittelbar auf dem Kernmaterial aus Natriumpercarbonat befindet, kann sich so auch bei Aufsprühen einer Lösung, die kein Natriumcarbonat enthält, zwischen dem Kern und der erfindungsgemäßen Hüllschicht eine Übergangsschicht bilden, die Natriumsulfat in Form des hexagonalen Natriumsulfat-Natriumcarbonat-Mischsalzes enthält.

Die erfindungsgemäßen umhüllten Natriumpercarbonatpartikel mit einer Hüllschicht, die Natriumsulfat in Form einer Hochtemperaturphase enthält, zeigen überraschenderweise eine bessere Lagerstabilität in Waschmittel- und Reinigungsmittelzubereitungen als umhüllte Natriumpercarbonatpartikel, die in der Hüllschicht Natriumsulfat nur in Form von Natriumsulfat(V) oder Burkeit aufweisen.

Bei einem Gehalt an mindestens 70 Gew.-% Natriumsulfat in der äußersten Hüllschicht zeigen die erfindungsgemäß umhüllten Natriumpercarbonatpartikel außerdem keine Verbackung unter Druckeinwirkung und nur eine geringe Wärmefreisetzung in Substanz und können deshalb sicher in einem Silo gelagert werden, ohne dass es zu Verbackungen im Silo oder zu einer Selbsterwärmung des Siloinhalts kommt.

In einer weiteren Ausführungsform der Erfindung können die umhüllten Natriumpercarbonatpartikel eine zusätzliche Hüllschicht aufweisen, die als Hauptbestandteil ein Alkalimetallsilikat mit einem Modul SiO₂ zu Alkalimetalloxid von mehr als 2,5 enthält. Die zusätzliche Hüllschicht liegt vorzugsweise über der erfindungsgemäßen Hüllschicht. Die zusätzliche Hüllschicht enthält als Hauptbestandteil ein Alkalimetallsilikat, wenn sie keine weitere Komponente in einem Gewichtsanteil enthält, der größer ist als der Anteil an Alkalimetallsilikat. Der Modul des Alkalimetallsilikats liegt vorzugsweise im Bereich von 3 bis 5 und besonders bevorzugt im Bereich von 3,2 bis 4,2. Der Anteil der zusätzlichen Hüllschicht an den erfindungsgemäßen umhüllten Natriumpercarbonatpartikeln liegt vorzugsweise im Bereich von 0,2 bis 3 Gew.-%. Der Anteil an Alkalimetallsilikat im Material der zusätzlichen Hüllschicht beträgt vorzugsweise mehr als 50 Gew.-% und besonders bevorzugt mehr als 80 Gew.-%. Als Alkalimetallsilikat wird in der zusätzlichen Hüllschicht vorzugsweise Natriumsilikat und besonders bevorzugt Natriumwasserglas eingesetzt.

Erfindungsgemäß umhüllte Natriumpercarbonatpartikel mit einer zusätzlichen Hüllschicht, die als Hauptbestandteil ein Alkalimetallsilikat mit einem Modul SiO₂ zu Alkalimetalloxid von mehr als 2,5 enthält, zeigen zusätzlich eine verzögerte Lösezeit in Wasser und eine verbesserte Lagerstabilität in wasserhaltigen flüssigen oder gelförmigen Medien bei Wassergehalten von bis zu 15 Gew.-%. Sie lassen sich deshalb vorteilhaft zur Herstellung von flüssigen oder gelförmigen Waschmittel-oder Reinigungsmittelzubereitungen einsetzen.

In einer weiteren Ausführungsform der Erfindung können die umhüllten Natriumpercarbonatpartikel auf ihrer Oberfläche zusätzlich 0,01 bis 1 Gew.-%, vorzugsweise 0,1 bis 0,5 Gew.-%, eines feinteiligen Oxids der Elemente Si, Al oder Ti oder eines Mischoxids dieser Elemente aufweisen. Geeignete feinteilige Oxide sind zum Beispiel pyrogene Oxide, die durch Flammhydrolyse von flüchtigen Verbindungen der Elemente Silicium, Aluminium oder Titan oder von Mischungen dieser Verbindungen erhalten werden. Die auf diesem Weg erhältlichen pyrogenen Oxide oder Mischoxide weisen vorzugsweise eine mittlere Primärpartikelgröße von weniger als 50 nm auf und können zu größeren Partikeln aggregiert sein, deren mittlere Partikelgröße vorzugsweise weniger als 20 µm beträgt. Ebenso geeignet sind gefällte Oxide, die aus wässrigen Lösungen von Verbindungen der Elemente Silicium, Aluminium oder Titan oder Mischungen dieser Verbindungen ausgefällt wurden. Die gefällten Oxide, bzw. Mischoxide können neben Silicium, Aluminium und/oder Titan noch geringe Mengen an Alkalimetall- oder Erdalkalimetallionen enthalten. Die mittlere Partikelgröße der gefällten Oxide beträgt vorzugsweise weniger als 50 µm und besonders bevorzugt weniger als 20 µm. Die spezifische Oberfläche der feinteiligen Oxide nach BET liegt vorzugsweise im Bereich von 100 bis 300 m²/g.

Vorzugsweise weisen die umhüllten Natriumpercarbonatpartikel auf ihrer Oberfläche ein hydrophobiertes feinteiliges Oxid und besonders bevorzugt eine hydrophobierte pyrogene oder gefällte Kieselsäure auf. Hydrophobierte Oxide im Sinne der Erfindung sind Oxide, die an ihrer Oberfläche über chemische Bindungen gebundene organische Reste aufweisen und von Wasser nicht benetzt werden. Hydrophobierte Oxide können zum Beispiel durch Umsetzen von pyrogenen oder gefällten Oxiden mit Organosilanen, Silazanen oder Polysiloxanen hergestellt werden. Geeignete Siliciumverbindungen zur Herstellung von hydrophobierten Oxiden sind aus EP-A 0 722 992, Seite 3, Zeile 9 bis Seite 6, Zeile 6 bekannt. Besonders bevorzugt sind hydrophobierte Oxide, die durch Umsetzung eines feinteiligen Oxids mit einer Siliciumverbindung der in EP-A 0 722 992 angeführten Verbindungsklassen (a) bis (e) und (k) bis (m) hergestellt wurden. Die hydrophobierten feinteiligen Oxide weisen vorzugsweise eine Methanolbenetzbarkeit von mindestens 40 auf.

Erfindungsgemäß umhüllte Natriumpercarbonatpartikel, die auf ihrer Oberfläche zusätzlich ein feinteiliges Oxid aufweisen, zeigen eine noch geringere Neigung zur Verbackung bei der Lagerung, vor allem bei der Lagerung unter Druckbelastung und sind deshalb noch besser silierbar. Darüber hinaus weisen solche Partikel in Waschmittel- und Reinigungsmittel-Zubereitungen eine weiter erhöhte Lagerstabilität auf.

Die erfindungsgemäßen Natriumpercarbonatpartikel weisen vorzugsweise eine mittlere Partikelgröße im Bereich von 0,2 bis 5 mm und besonders bevorzugt im Bereich von 0,5 bis 2 mm auf. Bevorzugt werden Natriumpercarbonatpartikel mit einem geringen Feinkornanteil, vorzugsweise mit einem Anteil von weniger als 10 Gew.-% Partikel kleiner als 0,2 mm und besonders bevorzugt weniger als 10 Gew.-% Partikel mit einer Partikelgröße von weniger als 0,3 mm.

Die erfindungsgemäßen Natriumpercarbonatpartikel weisen vorzugsweise eine im Wesentlichen kugelförmige Gestalt auf mit einer glatten Oberfläche. Partikel mit einer glatten Oberfläche weisen eine Oberflächenrauhigkeit von weniger als 10 % des Partikeldurchmessers und bevorzugt von weniger als 5 % des Partikeldurchmessers auf.

Durch eine entsprechende Auswahl der Partikelgröße und Partikelform lässt sich die Lagerstabilität der erfindungsgemäßen Natriumpercarbonatpartikel in Waschmittel- und Reinigungsmittelzubereitungen weiter verbessern.

Die erfindungsgemäßen umhüllten Natriumpercarbonatpartikel lassen sich vorteilhaft als bleichwirksamer Bestandteil in Waschmitteln und Reinigungsmitteln verwenden. Waschmittel im Sinne der Erfindung sind alle Zubereitungen, die zum Reinigen von Textilien in einer wässrigen Waschflotte geeignet sind. Reinigungsmittel im Sinne der Erfindung sind alle Zubereitungen, die im Zusammenwirken mit Wasser zur Reinigung von Oberflächen geeignet sind, die kein oder nur wenig Wasser aufsaugen. Eine im Sinne der Erfindung bevorzugte Form von Reinigungsmitteln sind Maschinengeschirrreiniger, die zum maschinellen Reinigen von Geschirr und Besteck geeignet sind.

Ein weiterer Gegenstand der Erfindung sind Waschmittel und Reinigungsmittel, die erfindungsgemäß umhüllte Natriumpercarbonatpartikel enthalten. Die erfindungsgemäßen Waschmittel und Reinigungsmittel enthalten die erfindungsgemäßen umhüllten Natriumpercarbonatpartikel vorzugsweise in einer Menge von 1 bis 40 Gew.-% bezogen auf die Gesamtmenge des Waschmittels beziehungsweise Reinigungsmittels.

Die erfindungsgemäßen Waschmittel und Reinigungsmittel können eine feste Form aufweisen und können dann neben den erfindungsgemäßen umhüllten Natriumpercarbonatpartikeln noch weitere Komponenten in Form von Pulver oder in Form von Granulaten enthalten. Sie können darüber hinaus auch verpresste Formkörper umfassen, wobei die erfindungsgemäßen umhüllten Natriumpercarbonatpartikeln Bestandteil der verpressten Formkörper sein können. Solche verpressten Formkörper in Form von Extrudaten, Pellets, Briketts oder Tabletten können durch Verfahren der Pressagglomeration, insbesondere durch Extrusion, Strangpressen, Lochpressen, Walzenkompaktieren oder Tablettieren hergestellt werden. Für die Durchführung der Pressagglomeration können die erfindungsgemäßen Waschmittel oder Reinigungsmittel zusätzlich ein Bindemittel enthalten, das den Formkörpern bei der Pressagglomeration eine höhere Festigkeit verleiht. Vorzugsweise wird bei erfindungsgemäßen Waschmitteln und Reinigungsmitteln, die verpresste Formkörper umfassen, aber kein zusätzliches Bindemittel verwendet und einer der waschaktiven Bestandteile, zum Beispiel ein nichtionisches Tensid, erfüllt die Funktion des Bindemittels.

Die erfindungsgemäßen Waschmittel und Reinigungsmittel können darüber hinaus auch eine flüssige Form oder Gelform aufweisen und die erfindungsgemäßen umhüllten Natriumpercarbonatpartikel in einer flüssigen Phase, beziehungsweise einer Gelphase dispergiert enthalten. Neben den erfindungsgemäßen umhüllten Natriumpercarbonatpartikeln können in der flüssigen Phase, beziehungsweise der Gelphase weitere Partikel dispergiert sein. Die rheologischen Eigenschaften der flüssigen Phase, beziehungsweise der Gelphase werden vorzugsweise so eingestellt, dass die darin dispergierten Partikel suspendiert bleiben und sich während einer Lagerung nicht absetzen. Die Zusammensetzung einer flüssigen Phase wird deshalb vorzugsweise so gewählt, dass sie thixotrope oder pseudoplastische Fließeigenschaften aufweist. Zur Einstellung solcher Fließeigenschaften können Suspensionshilfsmittel, wie quellende Tone, insbesondere Montmorillonite, gefällte und pyrogene Kieselsäuren, pflanzliche Gummis, insbesondere Xanthane und polymere Gelierungsmittel, wie Carboxylgruppen enthaltende Vinylpolymere zugesetzt werden.

Erfindungsgemäße Waschmittel und Reinigungsmittel in flüssiger Form oder Gelform enthalten vorzugsweise erfindungsgemäße umhüllte Natriumpercarbonatpartikel mit einer zusätzlichen Hüllschicht, die als Hauptbestandteil ein Alkalimetallsilikat mit einem Modul SiO₂ zu Alkalimetalloxid von mehr als 2,5 enthält. In dieser Ausführungsform können die Waschmittel und Reinigungsmittel bis zu 15 Gew.-% Wasser enthalten, ohne dass es während einer Lagerung zu einem Anlösen der umhüllten Natriumpercarbonatpartikel und einem dadurch bewirkten Freisetzen von Wasserstoffperoxid in die flüssige Phase beziehungsweise Gelphase kommt.

Die erfindungsgemäßen Waschmittel und Reinigungsmittel können neben den erfindungsgemäßen umhüllten Natriumpercarbonatpartikeln als weitere Komponenten beispielsweise noch Tenside, Builder, alkalische Komponenten, Bleichaktivatoren, Enzyme, chelatisierende Komplexbildner, Vergrauungsinhibitoren, Schauminhibitoren, optische Aufheller, Duftstoffe und Farbstoffe enthalten.

Als Tenside eignen sich für die erfindungsgemäßen Waschmittel und Reinigungsmittel vor allem anionische, nichtionische und kationische Tenside.

Geeignete anionische Tenside sind zum Beispiel Tenside mit Sulfonatgruppen, vorzugsweise Alkylbenzolsulfonate, Alkansulfonate, alpha-Olefinsulfonate, alpha-Sulfofettsäureester oder Sulfosuccinate. Bei Alkylbenzolsulfonaten werden solche mit einer geradkettigen oder verzweigten Alkylgruppe mit 8 bis 20 Kohlenstoffatomen, insbesondere mit 10 bis 16 Kohlenstoffatomen bevorzugt. Bevorzugte Alkansulfonate sind solche mit gradkettigen Alkylketten mit 12 bis 18 Kohlenstoffatomen. Bei alpha-Olefinsulfonaten werden vorzugsweise die Reaktionsprodukte der Sulfonierung von alpha-Olefinen mit 12 bis 18 Kohlenstoffatomen eingesetzt. Bei den alpha-Sulfofettsäureestern werden Sulfonierungsprodukte von Fettsäureestern aus Fettsäuren mit 12 bis 18 Kohlenstoffatomen und kurzkettigen Alkoholen mit 1 bis 3 Kohlenstoffatomen bevorzugt. Als anionische Tenside eignen sich auch Tenside mit einer Sulfatgruppe im Molekül, vorzugsweise Alkylsulfate und Ethersulfate. Bevorzugte Alkylsulfate sind solche mit geradkettigen Alkylresten mit 12 bis 18 Kohlenstoffatomen. Geeignet sind außerdem beta-verzweigte Alkylsulfate und in der Mitte der längsten Alkylkette ein- oder mehrfach alkylsubstituierte Alkylsulfate. Bevorzugte Ethersulfate sind die Alkylethersulfate, die durch Ethoxylierung von linearen Alkoholen mit 12 bis 18 Kohlenstoffatomen mit 2 bis 6 Ethylenoxideinheiten und anschließende Sulfatierung erhalten werden. Als anionische Tenside können schließlich auch Seifen verwendet werden, wie zum Beispiel Alkalimetallsalze von Laurinsäure, Myristinsäure, Palmitinsäure, Stearinsäure und/oder natürlichen Fettsäuregemischen, wie zum Beispiel Kokos-, Palmkern- oder Talgfettsäuren.

Als nicht-ionische Tenside eignen sich zum Beispiel alkoxylierte Verbindungen, insbesondere ethoxylierte und propoxylierte Verbindungen. Besonders geeignet sind Kondensationsprodukte von Alkylphenolen oder Fettalkoholen mit 1 bis 50 mol, vorzugsweise 1 bis 10 mol Ethylenoxid und/oder Propylenoxid. Ebenfalls geeignet sind Polyhydroxyfettsäureamide, in denen am Amidstickstoff ein organischer Rest mit einer oder mehreren Hydroxylgruppen, welche auch alkoxyliert sein können, gebunden ist. Ebenfalls als nicht-ionische Tenside geeignet sind Alkylglycoside mit einer geradkettigen oder verzweigten Alkylgruppe mit 8 bis 22 Kohlenstoffatomen, insbesondere mit 12 bis 18 Kohlenstoffatomen und einem Mono- oder Diglycosidrest, der vorzugsweise von Glucose abgeleitet ist.

Geeignete kationische Tenside sind beispielsweise mono- und dialkoxylierte quaternäre Amine mit einem am Stickstoff gebundenen C₆- bis C₁₈-Alkylrest und ein oder zwei Hydroxyalkylgruppen.

Die erfindungsgemäßen Waschmittel und Reinigungsmittel enthalten weiterhin Builder, die in der Lage sind, bei der Verwendung im Wasser gelöste Calcium- und Magnesiumionen zu binden. Geeignete Builder sind Alkalimetallphosphate und Alkalimetallpolyphosphate, insbesondere Pentanatriumtriphosphat; wasserlösliche und wasserunlösliche Natriumsilikate, insbesondere Schichtsilikate der Formel Na₅Si₂O₅; Zeolithe der Strukturen A, X und/oder P; sowie Trinatriumcitrat. Zusätzlich zu den Buildern können außerdem organische Cobuilder, wie zum Beispiel Polyacrylsäure, Polyasparaginsäure und/oder Acrylsäure-Copolymere mit Methacrylsäure, Acrolein oder sulfonsäurehaltigen Vinylmonomeren, sowie deren Alkalimetallsalze verwendet werden.

Die erfindungsgemäßen Waschmittel und Reinigungsmittel enthalten außerdem in der Regel alkalische Komponenten, die bei bestimmungsgemäßer Anwendung in der Waschflotte, beziehungsweise der wässrigen Reinigungsmittellösung einen pH-Wert im Bereich von 8 bis 12 bewirken. Als alkalische Komponenten sind vor allem Natriumcarbonat, Natriumsesquicarbonat, Natriummetasilikat und andere lösliche Alkalimetallsilikate geeignet.

Als Bleichaktivatoren eignen sich für die erfindungsgemäßen Waschmittel und Reinigungsmittel vor allem Verbindungen mit einer oder mehreren perhydrolysefähigen an Stickstoff oder an Sauerstoff gebundenen Acylgruppen, die mit dem aus den Natriumpercarbonatpartikeln freigesetzten Wasserstoffperoxid in der Waschflotte, beziehungsweise der wässrigen Reinigungsmittellösung zu Peroxycarbonsäuren reagieren. Beispiele für solche Verbindungen sind mehrfach acylierte Alkylendiamine, wie insbesondere Tetraacetylethylendiamin (TAED); acylierte Triazinderivate, insbesondere 1,5-Diacetyl-2,4-dioxohexahydro-1,3,5-triazin (DADHT); acylierte Glykolurile, insbesondere Tetraacetylglykoluril (TAGU); N-Acylimide, insbesondere N-Nonanoylsuccinimid (NOSI); acylierte Phenolsulfonate, insbesondere n-Nonanoyl- oder iso-Nonanoyloxybenzolsulfonat (n- bzw. iso-NOBS); Carbonsäureanhydride, wie Phthalsäureanhydrid; acylierte mehrwertige Alkohole, wie Ethylenglykoldiacetat, 2,5-Diacetoxy-2,5-dihydrofuran, acetyliertes Sorbitol und Mannitol und acylierte Zucker, wie Pentaacetylglucose; Enolester; sowie N-acylierte Lactame, insbesondere N-Acylcaprolactame und N-Acylvalerolactame. Ebenfalls als Bleichaktivatoren geeignet sind aminofunktionalisierte Nitrile und deren Salze (Nitrilquats), die zum Beispiel aus der Zeitschrift Tenside Surf. Det. 1997, 34(6), Seiten 404-409 bekannt sind. Als Bleichaktivatoren können außerdem Übergangsmetallkomplexe eingesetzt werden, die Wasserstoffperoxid zur bleichenden Fleckentfernung aktivieren können. Geeignete Übergangsmetallkomplexe sind beispielsweise bekannt aus EP-A 0 544 490 Seite 2, Zeile 4 bis Seite 3, Zeile 57; WO 00/52124 Seite 5, Zeile 9 bis Seite 8, Zeile 7 und Seite 8, Zeile 19 bis Seite 11, Zeile 14; WO 04/039932, Seite 2, Zeile 25 bis Seite 10, Zeile 21; WO 00/12808 Seite 6, Zeile 29 bis Seite 33, Zeile 29; WO 00/60043 Seite 6, Zeile 9 bis Seite 17, Zeile 22; WO 00/27975, Seite 2, Zeilen 1 bis 18 und Seite 3, Zeile 7 bis Seite 4, Zeile 6; WO 01/05925, Seite 1, Zeile 28 bis Seite 3, Zeile 14; WO 99/64156, Seite 2, Zeile 25 bis Seite 9, Zeile 18; sowie GB-A 2 309 976, Seite 3, Zeile 1 bis Seite 8, Zeile 32.

Die erfindungsgemäßen Waschmittel und Reinigungsmittel können weiterhin Enzyme enthalten, die die Reinigungswirkung verstärken, insbesondere Lipasen, Cutinasen, Amylasen, neutrale und alkalische Proteasen, Esterasen, Zellulasen, Pektinasen, Lactasen und/oder Peroxidasen. Die Enzyme können dabei an Trägerstoffe adsorbiert oder in Hüllsubstanzen eingebettet sein, um sie gegen Zersetzung zu schützen.

Die erfindungsgemäßen Waschmittel und Reinigungsmittel können außerdem chelatisierende Komplexbildner für Übergangsmetalle enthalten, mit denen sich eine katalytische Zersetzung von Aktivsauerstoffverbindungen in der Waschflotte, beziehungsweise der wässrigen Reinigungsmittellösung vermeiden läßt. Geeignet sind zum Beispiel Phosphonate, wie Hydroxyethan-1,1-disphosphonat, Nitrilotrimethylenphosphonat, Diethylentriaminpenta(methylenphosphonat), Ethlyendiamintetra(methylenphosphonat), Hexamethylendiamintetra(methylenphosphonat) und deren Alkalimetallsalze. Ebenfalls geeignet sind Nitrilotriessigsäure und Polyaminocarbonsäuren, wie insbesondere Ethylendiamintetraessigsäure, Diethylentriaminpentaessigsäure, Ethylendiamin-N,N'-disuccinsäure, Methylglycindiessigsäure und Polyaspartate, sowie deren Alkalimetall- und Ammoniumsalze. Schließlich sind auch mehrwertige Carbonsäuren und insbesondere Hydroxycarbonsäuren, wie insbesondere Weinsäure und Zitronensäure als chelatisierende Komplexbildner geeignet.

Die erfindungsgemäßen Waschmittel können zusätzlich Vergrauungsinhibitoren enthalten, die von der Faser abgelösten Schmutz suspendiert halten und ein Wiederaufziehen des Schmutzes auf die Faser verhindern. Geeignete Vergrauungsinhibitoren sind zum Beispiel Celluloseether, wie Carboxymethylcellulose und deren Alkalimetallsalze, Methylcellulose, Hydroxyethylcellulose und Hydroxypropylcellulose. Ebenfalls geeignet ist Polyvinylpyrrolidon.

Die erfindungsgemäßen Waschmittel und Reinigungsmittel können weiterhin auch Schauminhibitoren enthalten, die die Schaumbildung in der Waschflotte verringern. Geeignete Schauminhibitoren sind zum Beispiel Organopolysiloxane wie Polydimethylsiloxan, Paraffine und/oder Wachse, sowie deren Gemische mit feinteiligen Kieselsäuren.

Die erfindungsgemäßen Waschmittel können gegebenenfalls optische Aufheller enthalten, die auf die Faser aufziehen, im UV-Bereich Licht absorbieren und blau fluoreszieren, um eine Vergilbung der Faser auszugleichen. Geeignete optische Aufheller sind zum Beispiel Derivate der Diaminostilbendisulfonsäure, wie Alkalimetallsalze von 4,4'-Bis-(2-anilino-4-morpholino-1,3,5-triazinyl-6-amino)-stilben-2,2'-disulfonsäure oder substituierte Diphenylstyryle, wie Alkalimetallsalze von 4,4'-Bis-(2-sulfostyrlyl)-diphenyl.

Die erfindungsgemäßen Waschmittel und Reinigungsmittel können schließlich auch noch Duftstoffe und Farbstoffe enthalten.

Erfindungsgemäße Waschmittel und Reinigungsmittel in flüssiger Form oder Gelform können zusätzlich noch bis zu 30 Gew.-% organische Lösungsmittel, wie zum Beispiel Methanol, Ethanol, n-Propanol, Isopropanol, n-Butanol, Ethylenglykol, 1,2-Propylenglykol, 1,3-Propylenglykol, 1,4-Butylenglykol, Glycerin, Diethylenglykol, Ethylenglykolmethylether, Ethanolamin, Diethanolamin und/oder Triethanolamin enthalten.

Die erfindungsgemäßen Waschmittel und Reinigungsmittel zeigen gegenüber Waschmitteln und Reinigungsmitteln, die nicht erfindungsgemäß umhüllte Natriumpercarbonatpartikel enthalten, eine bessere Lagerstabilität mit geringeren Verlusten an Aktivsauerstoffgehalt bei einer Lagerung unter feuchten Bedingungen.

Eine Ausführungsform der erfindungsgemäßen Reinigungsmittel sind Maschinengeschirrreiniger, vorzugsweise in Form von Tabletten, wobei die Geschirrreiniger neben den erfindungsgemäßen umhüllten Natriumpercarbonatpartikeln noch ein Silberkorrosionsschutzmittel enthalten können. Silberkorrosionsschutzmittel sind Mittel, die das Anlaufen von Nichteisenmetallen, insbesondere von Silber, während der maschinellen Reinigung mit dem Maschinengeschirrreiniger verhindern oder vermindern. Als Silberkorrosionsschutzmittel eignen sich Verbindungen aus der Reihe der Triazole, Benzotriazole, Bisbenzotriazole, Aminotriazole und Alkylaminotriazole. Die Verbindungen der genannten Stoffklassen können dabei auch Substituenten, wie zum Beispiel lineare oder verzweigte Alkylgruppen mit 1 bis 20 C-Atomen, sowie Vinyl-, Hydroxy-, Thiol- oder Halogenreste aufweisen. Bei Bisbenzotriazolen sind Verbindungen bevorzugt, in denen die beiden Benzotriazolgruppen jeweils in 6-Stellung über eine Gruppe X verbunden sind, worin X eine Bindung, eine geradkettige, gegebenenfalls mit einer oder mehreren C₁-bis C₄-Alkylgruppen substituierte Alkylengruppe mit bevorzugt 1 bis 6 Kohlenstoffatomen, ein Cycloalkylrest mit mindestens 5 Kohlenstoffatomen, eine Carbonylgruppe, eine Sulfonylgruppe, ein Sauerstoff- oder ein Schwefelatom sein kann. Ein besonders bevorzugtes Silberkorrosionsschutzmittel ist Tolyltriazol.

### Beispiele

### Herstellung von umhüllten Natriumpercarbonatpartikeln

Zur Herstellung der umhüllten Natriumpercarbonatpartikel wurden Natriumpercarbonatpartikel eingesetzt, die nach dem in EP-B 0 716 640 beschriebenen Verfahren durch Wirbelschicht-Aufbaugranulation aus wässriger Wasserstoffperoxidlösung und wässriger Sodalösung hergestellt wurden und einen mittleren Teilchendurchmesser X₅₀ von 0,78 mm und einen Feinkornanteil von kleiner 0,2 mm von weniger als 2 Gew.-% aufwiesen. Die Hüllschicht wurde auf diese Partikel nach dem in EP-B 0 863 842 in Abschnitt [0021] beschriebenen Verfahren aufgebracht durch Aufsprühen einer 20 Gew.-% wässrigen Lösung der Hüllstoffe in einer Wirbelschicht bei einer Wirbelschichttemperatur von 55 bis 60 °C und gleichzeitiges Verdampfen von Wasser. Die in Tabelle 1 in Gewichtsprozent angegebenen Hüllstoffmengen beziehen sich auf die aufgesprühte Gesamtmenge an Hüllstoffen, gerechnet ohne Kristallwasser, relativ zur Gesamtmenge an eingesetzten Natriumpercarbonatpartikeln und Hüllstoffen.

**Tabelle 1**

| Zusammensetzung der umhüllten Natriumpercarbonatpartikel | | |
|---|---|---|
| Beispiel | Hüllstoffmenge [Gew.-%] | Zusammensetzung der Hüllschicht [Gewichtsteile] |
| 1* | 6 | Na₂SO₄ 100 |
| 2 | 6 | Na₂SO₄/NaBO₂ 90:10 |
| 3 | 8 | Na₂SO₄/NaBO₂ 95:5 |

| | | |
|---|---|---|
| *Nicht erfindungsgemäß | | |

### Phasenanalyse der Hüllschicht

Die untersuchten Proben wurden durch Pressen mit einem Druck von 40 kN zu zylindrischen Presslingen verformt, an deren Oberfläche durch den Pressvorgang das Material der Hüllschicht angereichert ist. Die in der Hüllschicht vorliegenden Phasen wurden durch Pulver-Röntgendiffraktometrie mit Synchrotronstrahlung der Wellenlänge 95,937 pm bei streifendem Strahleinfall unter Einfallswinkeln von 0,2, 0,5, 1 und 2° bestimmt. In den Diffraktogrammen nimmt mit abnehmendem Einfallswinkel die relative Intensität der Reflexe zu, die von den in der Hüllschicht vorliegenden Phasen stammen. Die mit diesem Verfahren in der Hüllschicht nachgewiesenen Phasen sind in Tabelle 2 aufgeführt.

**Tabelle 2**

| | | | |
|---|---|---|---|
| Phasenzusammensetzung der Hüllschicht | | | |

| Beispiel | Phasen | | ICDD-Datensatznummer |
|---|---|---|---|
| 1* | Na₂SO₄ (V) | (Hauptphase) | 00-037-1465 |
| | Burkeit | (Hauptphase) | 01-085-1731 |
| 2 | Na₆(SO₄)₂(CO₃) | (Hauptphase) | 00-024-1139 |
| | Na₂SO₄ (III) | (Hauptphase) | 00-024-1132 |
| | Burkeit | (Nebenphase) | 01-085-1731 |
| | Na₂SO₄ (V) | (Spuren) | 00-037-1465 |

### Quantitative Phasenanalyse der Natriumpercarbonatpartikel

Für die Probe von Beispiel 3 wurde die Phasenzusammensetzung durch Rietveld-Analyse quantifiziert. Dazu wurden 1,942 g Probe mit 0,4513 g Korund (NIST SRM Nr. 676) gemischt und gemahlen und mit Synchrotronstrahlung der Wellenlänge 116,425 pm ein Pulver-Diffraktogramm in θ/2θ-Geometrie gemessen.

**Tabelle 3**

| Phasenzusammensetzung der Probe aus Beispiel 3 | | |
|---|---|---|
| Phase | ICDD-Datensatznummer | Anteil [Gew.-%] |
| Natriumpercarbonat | 01-083-1989 | 87,6 |
| Na₂SO₄ (III) | 00-024-1132 | 4,5 |
| Burkeit | 01-085-1731 | 2,7 |
| Na₂SO₄ (V) | 00-037-1465 | 1,6 |
| Trona | 00-029-1447 | 0,1 |
| Amorph | | 3,5 |

### Lagerstabilität in Waschpulver

Zur Bestimmung der Lagerstabilität in Waschpulver wurden 405 g zeolithhaltiges Vollwaschmittelpulver IEC-A* BASE (wfk-Testgewebe GmbH, Krefeld) mit 15 g TAED und 80 g Natriumpercarbonat in einem Taumelmischer mindestens 10 min gemischt. Die Mischung wurde in ein wasserabweisend imprägniertes E2-Waschmittelpaket (Abmessung 19 x 14 x 4,5 cm) gefüllt, das mit Heißkleber verschlossen wurde. Das Waschmittelpaket wurde dann im Klimaschrank bei 35 °C und 80 % relativer Luftfeuchte gelagert. Nach Abkühlen des Waschmittelpakets auf Raumtemperatur außerhalb des Klimaschranks wurde der Inhalt des Waschmittelpakets über einen Probenteiler in Proben von je 12 g aufgeteilt. Der Aktivsauerstoffgehalt vor und nach Lagerung wurde in üblicher Weise permanganometrisch bestimmt. Aus dem Aktivsauerstoffgehalt vor der Lagerung und dem Aktivsauerstoffgehalt nach 8 Wochen Lagerung wurde als Maß für die Lagerstabilität in Waschpulver der Erhalt des Aktivsauerstoffgehalts (Oa-Erhalt) in Prozent ermittelt.

**Tabelle 4**

| Lagerstabilität von umhüllten Natriumpercarbonatpartikeln in Waschpulver | |
|---|---|
| Beispiel | Lagerstabilität [Oa-Erhalt in Prozent] |
| 1* | 58 |
| 2 | 86 |
| 3 | 90 |

| | |
|---|---|
| *Nicht erfindungsgemäß | |

## Patentansprüche

1. Natriumpercarbonatpartikel mit einer Hüllschicht,
**dadurch gekennzeichnet,**
**dass** die Hüllschicht Natriumsulfat in Form einer Hochtemperaturphase von Natriumsulfat und/oder einer Hochtemperaturphase eines Doppelsalzes der Zusammensetzung Na₄(SO₄)₁₊ₙ(CO₃)₁₋ₙ mit n von 0 bis 0,5 enthält.

2. Natriumpercarbonatpartikel nach Anspruch 1,
**dadurch gekennzeichnet,**
**dass** die Hüllschicht Natriumsulfat in Form einer Natriumsulfat(III)-Phase enthält.

3. Natriumpercarbonatpartikel nach Anspruch 1,
**dadurch gekennzeichnet,**
**dass** die Hüllschicht Natriumsulfat in Form einer Phase des Doppelsalzes mit hexagonaler Kristallstruktur enthält.

4. Natriumpercarbonatpartikel nach einem der vorangehenden Ansprüche,
**dadurch gekennzeichnet,**
**dass** die Hüllschicht mehr als 50 Gew.-% Natriumsulfat enthält.

5. Natriumpercarbonatpartikel nach einem der vorangehenden Ansprüche,
**dadurch gekennzeichnet,**
**dass** die Hüllschicht ein Natriumborat enthält.

6. Natriumpercarbonatpartikel nach Anspruch 5,
**dadurch gekennzeichnet,**
**dass** die Hüllschicht 0,5 bis 20 Gew.-% Natriumborat, gerechnet als NaBO₂, enthält.

7. Waschmittel,
enthaltend Natriumpercarbonatpartikel nach einem der Ansprüche 1 bis 6.

8. Reinigungsmittel,
enthaltend Natriumpercarbonatpartikel nach einem der Ansprüche 1 bis 6.

## Claims

1. Sodium percarbonate particles having a coating layer,
**characterized in that**
the coating layer comprises sodium sulphate in the form of a high-temperature phase of sodium sulphate and/or of a high-temperature phase of a double salt of the composition Na₄(SO₄)₁₊ₙ(CO₃)₁₋ₙ where n is 0 to 0.5.

2. Sodium percarbonate particles according to Claim 1,
**characterized in that**
the coating layer comprises sodium sulphate in the form of a sodium sulphate(III) phase.

3. Sodium percarbonate particles according to Claim 1,
**characterized in that**
the coating layer comprises sodium sulphate in the form of a phase of the double salt with hexagonal crystal structure.

4. Sodium percarbonate particles according to any one of the preceding claims,
**characterized in that**
the coating layer comprises more than 50% by weight of sodium sulphate.

5. Sodium percarbonate particles according to any one of the preceding claims,
**characterized in that**
the coating layer comprises a sodium borate.

6. Sodium percarbonate particles according to Claim 5,
**characterized in that**
the coating layer comprises 0.5 to 20% by weight of sodium borate, calculated as NaBO₂.

7. Detergent
comprising sodium percarbonate particles according to any one of Claims 1 to 6.

8. Cleaning composition
comprising sodium percarbonate particles according to any one of Claims 1 to 6.

## Revendications

1. Particules de percarbonate de sodium présentant une couche d'enrobage, **caractérisées en ce que** la couche d'enrobage comprend du sulfate de sodium sous la forme d'une phase à haute température de sulfate de sodium et/ou d'une phase à haute température d'un sel double de composition Na₄(SO₄)₁₊ₙ(CO₃)₁₋ₙ dans laquelle n vaut de 0 à 0,5.

2. Particules de percabonate de sodium selon la revendication 1, **caractérisées en ce que** la couche d'enrobage comprend du sulfate de sodium sous la forme d'une phase de sulfate de sodium (III).

3. Particules de percarbonate de sodium selon la revendication 1, **caractérisées en ce que** la couche d'enrobage comprend du sulfate de sodium sous la forme d'une phase du sel double présentant une structure cristalline hexagonale.

4. Particules de percarbonate de sodium selon l'une quelconque des revendications précédentes, **caractérisées en ce que** la couche d'enrobage comprend plus de 50 % en poids de sulfate de sodium.

5. Particules de percarbonate de sodium selon l'une quelconque des revendications précédentes, **caractérisées en ce que** la couche d'enrobage comprend un borate de sodium.

6. Particules de percarbonate de sodium selon la revendication 5, **caractérisées en ce que** la couche d'enrobage comprend de 0,5 à 20 % en poids de borate de sodium, calculé en tant que NaBO₂.

7. Lessive comprenant des particules de percarbonate de sodium selon l'une quelconque des revendications 1 à 6.

8. Composition de nettoyage comprenant des particules de percarbonate de sodium selon l'une quelconque des revendications 1 à 6.
